# EUROPEAN PATENT SPECIFICATION

(11) **EP 0 405 673 B1**
(45) Date of publication and mention of the grant of the patent: **15.03.1995**
(21) Application number: 90201649.2
(22) Date of filing: 25.06.1990
(51) Int. Cl.: G11B 20/14

(54) **Device for buffering data for the duration of cyclically recurrent buffer periods**
Anordnung zum Zwischenspeichern von Daten für die Dauer sich zyklisch wiederholender Zwischenspeicherzeiten
Procédé de mémorisation intermédiaire de données pour la durée de temps de mémorisation se répétant de façon cyclique

(30) Priority: 28.06.1989 NL 8901631
(43) Date of publication of application: 02.01.1991
(73) Proprietor: Philips Electronics N.V., 5621 BA Eindhoven (NL)
(72) Inventor: DeLaruelle, Antoine, NL-5656 AA Eindhoven (NL); Van Meerbergen, Jozef Louis, NL-5656 AA Eindhoven (NL); Niessen, Cornelis, NL-5656 AA Eindhoven (NL); McArdle, Owen Paul, NL-5656 AA Eindhoven (NL)
(74) Representative: Strijland, Wilfred

(56) References cited:
- EP-A- 0 094 671
- EP-A- 0 123 322
- DE-A- 2 946 702
- US-A- 4 281 355
- JOURNAL OF THE AUDIO ENGINEERING SOCIETY. vol. 31, no. 7/8, July 1983, NEW YORKUS pages 523 - 537; YUTAKA HIROTA: "LSIs for Digital Signal Processing Based ona PCM Standard Format"
- PATENT ABSTRACTS OF JAPAN vol. 10, no. 80 (P-441)(2137) 29 March 1986,& JP-A-60 217565 (RICOH K.K.) 31 October 1985,
- PATENT ABSTRACTS OF JAPAN vol. 4, no. 70 (P-12)(552) 23 May 1980,& JP-A-55 038617 (MATSUSHITA DENKI SANGYO K.K.) 18 March 1980,
- IEEE TRANSACTIONS ON CONSUMER ELECTRONICS. vol. CE-32, no. 4, November 1986,NEW YORK US pages 769 - 775; H.FARHANGI AND J.KONINGS: "A CD-ROM DATA RETRIEVERIC"

## Description

The invention relates to a device comprising
- memory locations for the buffering of data unit groups the data units being buffered during successive phases, for the duration of buffer periods which are recurrent for each group,
- a modulo address generator for generating, for each group, a series of addresses for the selection of the memory locations, respective logic address intervals between successive addresses in the relevant series being indicative of the respective buffer periods, the addresses in two successive series being shifted one address interval with respect to one another, each respective buffer period amounting to a respective first number of successive phases.

An example of such a device is known from European patent application No 123 322. Such a device may be used as part of a compact disc player comprising encoders and decoders for error correction. The use of decoding in compact disc players is outlined: "The Compact Disc Formats: Technology and Applications", K. Pohlmann, J. Audio Eng. Soc., Vol. 36, No. 4, April 1988, pages 250-287. The encoders as well as the decoders are based on the "cross-interleaved Reed-Solomon-code"; to this end, each encoder and decoder comprises a so-called "interleaver" having twenty-eight delay lines for delaying each time a corresponding number of data units, each time for the duration of mutually different buffer periods.

The device known from European patent application No. 123 322 utilises the mapping of buffer periods onto address intervals in a current series of addresses in order to access selected memory locations. The address interval between two addresses which are consecutive within a series is indicative (for example: numerically equal to) of the buffer period assigned to the data unit.

It is to be noted that a data unit is to be understood to mean herein a data entity (a bit, a byte, a record, a file, etc.) which is considered to form one unit at least for the benefit of buffering. Successive series are shifted one address interval unit with respect to one another. This implies that the same address selected during a previous series is selected again in a later series only if the total shift in the successive phases has covered the original address interval. However, because the original address interval is related to the relevant buffer period, said address has already become available for new data after the relevant last read operation.

In the known device writing occurs in exactly those memory locations in which data units from preceding phases have just completed their buffer period. In this way the number of memory locations required is minimal. However, this means that both a read and a write operation for the same memory location has to be performed per phase, which requires complex and fast control. Moreover, it imposes restrictions on the kind of memory that can be used.

It is, inter alia, an object of the invention to provide a device of the kind set forth, which requires simple control of reading and writing, and which allows the memory to be constructed simpler, smaller or faster.

The device according to the invention is defined in claim 1.

The offsets could be chosen for example so that either only the even or the odd addresses are concerned in each phase of a write operation or a read operation. When a subgroup of the addresses having a predetermined property (for example even/odd) is accessed in each phase, the memory can be constructed for example so as to be simpler smaller or faster, for example a sense amplifier is provided for an odd and an even column in an integrated circuit. Similarly, the offsets can be used to control the spread in the occupation of the memory locations.

Preferably the number of memory locations used is chosen to be equal to an integer power of two, because digital circuits operate better on binary numbers, for example in respect of the modulo operation, than numbers represented on a basis other than two.

It is to be noted that the device can be used not only as an interleaver or de-interleaver in a CD player, but also for parallel and cyclical data processing operations. In the latter case parallel streams of successive data are transformed so as to form new streams of successive data. Before the data of the new streams is processed again, data from different streams need be delayed with respect to one another in order to ensure that this data can be correctly combined at the correct instant.

### FIGURES

The invention will be described in detail hereinafter with reference to a drawing; therein:
Fig. 1 shows a first example of a data occupation in a memory realised via a device in accordance with the invention;
Fig. 2 shows a second example of a data occupation;
Fig. 3 shows a third example of a data occupation;
Fig. 4 shows a first embodiment of an address generator for use in a device in accordance with the invention;
Fig. 5 shows a second embodiment of an address generator;
Fig. 6 shows a third embodiment of such an address generator; and
Fig. 7 shows the formulae in support of the description of the address generator shown in Fig. 6.

### FIRST EXAMPLE OF A DATA OCCUPATION.

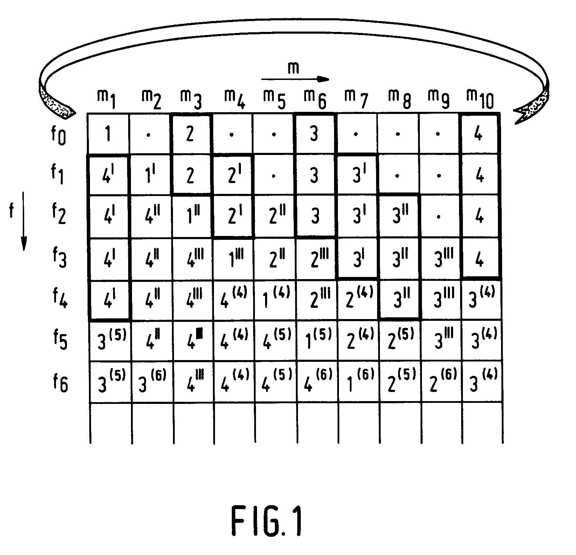

Fig. 1 shows a first example of a data occupation obtained by means of a device in accordance with the invention. The addresses m1 to m10 of ten memory locations are plotted in the horizontal direction. The successive phases f0, f1, f2, ..., f6, ... in which the respective current data is written after the relevant, already stored data has been read for the last time are plotted in the vertical direction. In phase f0 there is written the data denoted by 1, 2, 3, and 4 whereto there is assigned a buffer period equal to one phase, two phases, three phases and four phases, respectively. Consequently, each of this data will be stored in the memory for the duration of the relevant buffer period. The occupation during the phase f0 is chosen as follows. Data unit 1 is written at the address m1. Data unit 2, being buffered for the buffer period of two phases, is written at an address which is situated at an address interval equal to two address interval units from the preceding address m1. This number of address interval units equals the number of buffer period phases assigned to the data unit 2. Thus, the relevant address is the address m3. Data unit m3 will be buffered for three phases, so that it is written at a next address m6 which is situated at three address interval units from the preceding address m3. Data unit 4 will be buffered for four phases and hence will be written at the address m10 which deviates from the address m6 by four address interval units. The total number of memory locations equals the sum of the buffer periods assigned per phase, that is to say ten.

During the phase f1 there are written new data units 1′, 2′, 3′ and 4′ which are buffered for the duration of one, two, three and four phases, respectively. Each of the addresses of the memory locations in which the new data units are written has been shifted one address interval unit with respect to the address at which the data unit having the same buffer period has been written during the preceding phase. The data units 1′, 2′, 3′ and 4′ are written at the addresses m2, m4, m7 and m1. The data unit 4′ is thus written in the location in which the data unit 1 has just been read.

During the phase f2 data units 1˝, 2˝, 3˝ and 4˝ are written, buffer periods of one, two, three and four phases, respectively, being assigned thereto. The write addresses have again been shifted one address interval unit with respect to the write addresses of the preceding group of data units. Thus, the data unit 1˝ is written in the location having the address m3 where the data unit 2 has just been read for the last time. The data units 2˝ and 3˝ are written at the addresses m5 and m8. The data unit 4˝ is written at the address m2 where the data unit 1′ has just been read.

During the phase f3 data units 1‴, 2‴, 3‴ and 4‴ are written at the addresses m4, m6, m9 and m3. The data units 1‴, 2‴, 3‴ and 4‴ are written in the memory locations which have just been vacated because the buffer period of the relevant previous data units has elapsed. The drawing also shows the new data units of subsequent phases f4, f5 and f6. Because the numbers of address interval units between the addresses of a current group of data units equal the relevant numbers of buffer period phases, the successive groups can be interleaved in the manner shown. Consequently, a dense memory occupation is realised with systematic, simple addressing.

### SECOND EXAMPLE OF A DATA OCCUPATION.

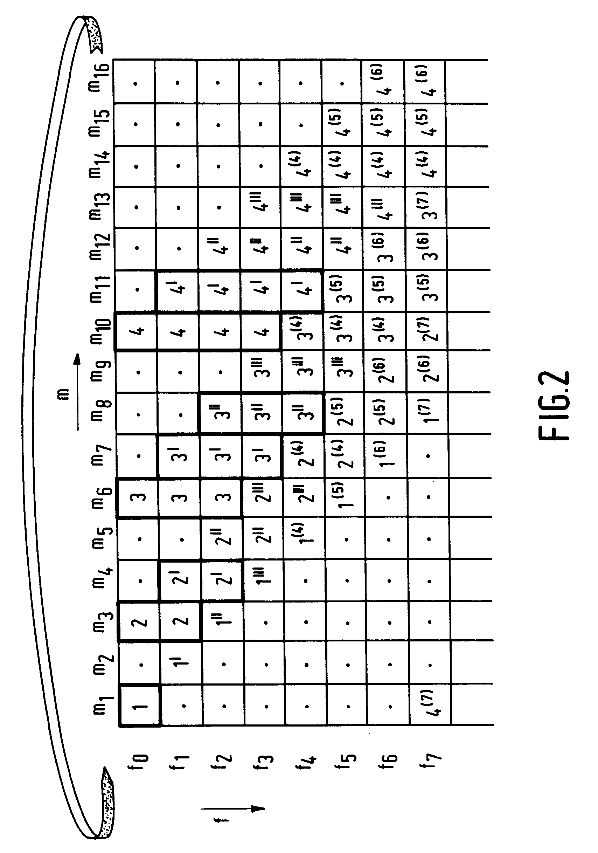

Fig. 2 shows a second example of a data occupation in a memory which comprises more locations than strictly necessary. The notation used corresponds to that of Fig. 1. The present memory comprises sixteen memory locations having the addresses m1 to m16. After a data unit has reached the last address, in this case the data unit 4⁽⁶⁾ in phase f6, the corresponding data unit, in this case 4⁽⁷⁾, of the next group, phase f7, is placed at the first address m1 again according to the modulo-16 address generator. Even though the occupation is not optimum in view of the capacity of the memory, it offers the advantage that the addressing is simple when the number of locations used is a power of two. In digital circuits it is easier to utilise powers of two than other numbers.

### THIRD EXAMPLE OF A DATA OCCUPATION.

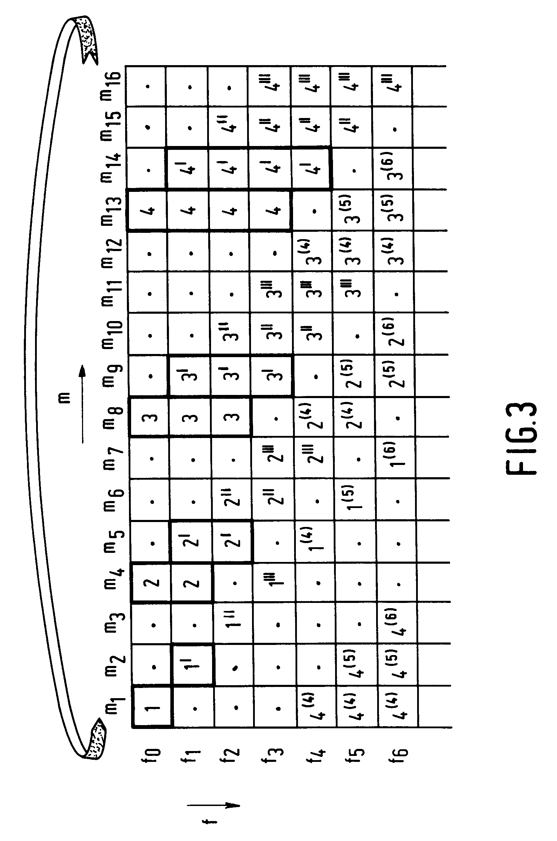

Fig. 3 shows a third example of a data occupation in a memory which comprises a number of memory locations which is larger than strictly necessary. The notation used again corresponds to that of the preceding Figures. Each of the address intervals is numerically equal to the relevant buffer periods plus a constant offset which is in this case equal to one address interval unit for all buffer periods. The address interval between two current, successive addresses (for example, the addresses m6 and m10 in the phase f2) is now larger than the associated buffer period (amounting to three phases for the data unit 3˝ in the present example). Consequently, a dummy phase occurs between the reading of an address for the last time and the writing at the same address (the phase f5 is a dummy phase for the memory location m10). This creates the possibility of distributing read operations and write operations relating to one and the same memory location between phases so that, for example simpler or slower control can suffice. In the preceding Figures the lengths of the buffer periods have been chosen to be consecutive merely by way of example. It will be evident that similar occupations of the memory can be realised by making a different choice as regards the buffer periods. Moreover, the offsets associated with each of the addresses in Fig. 3 are chosen to be mutually equal by way of example. The user is free to choose mutually different offsets. The off-sets could be chosen, for example so that either only the even or only the odd addresses are concerned in each phase of a write operation or a read operation. When a sub-group of the addresses having a predetermined property (for example, even/odd) is accessed in each phase, the memory can be constructed, for example so as to be simpler, smaller or faster, for example, a sense amplifier is provided for an odd and an even column in an integrated memory circuit. Similarly, the offsets can be used to control the spread in the occupation of the memory locations.

### FIRST EMBODIMENT OF AN ADDRESS GENERATOR.

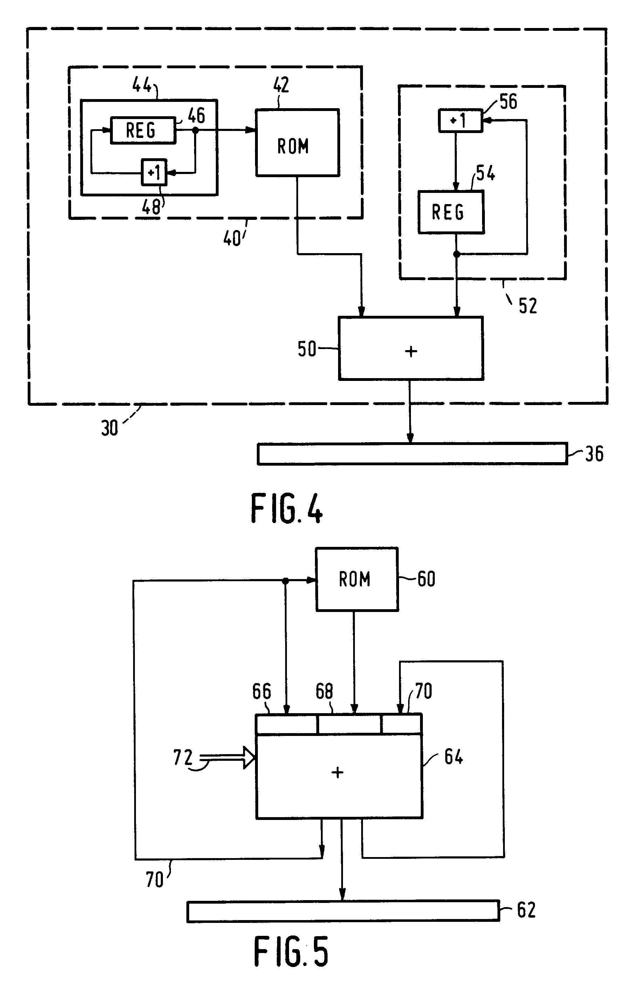

Fig. 4 shows a first embodiment of an address generator which is suitable for use in a device in accordance with the invention and which comprises N memory locations. For each phase the address generator 30 selects the memory addresses for the memory locations 36 with intervals which are indicative of the relevant buffer periods. The address sequences generated for two successive phases deviate from one another by one address interval unit. The address intervals in a sequence are determined by the interval generator 40. The interval generator 40 comprises a memory 42, for example a ROM, having addresses, to be referred to hereinafter as ROM-addresses, for storing thereat the addresses for selected memory locations 36, to be referred to hereinafter as RAM-addresses, for generating a RAM address reference series. Using a selection circuit 44, the ROM addresses are successively accessed. To this end, the selection circuit 44 comprises, for example a register 46 which cyclically accesses the ROM addresses via an incrementation unit 48. The output of the interval generator 40 is coupled to an input of a modulo-N adder 50. The other input of the modulo-N adder 50 is coupled to the output of a jump generator 52 which calculates, for each subsequent series, the shift over one address interval unit and which performs a modulo calculation of the number of memory locations used. To this end, the jump generator 52 comprises, for example a register 54, an output of which is retro-coupled via an incrementation unit 56. Thus, for each phase there is generated a step value which is added to the address values from the ROM 42 in the modulo-N adder 50. The reference value is calculated modulo-N. Thus, a current RAM address series is generated by means of the reference series and the step value.

### SECOND EMBODIMENT OF AN ADDRESS GENERATOR.

Fig. 5 shows a second embodiment of an address generator which is suitable for use in a device in accordance with the invention which comprises N memory locations. The address generator comprises a memory 60, for example a ROM, in which the RAM addresses of a reference series for the N memory locations 62 are stored at successive ROM addresses. The address generator also comprises a programmable modulo-N adder 64 which is used for the calculation of the ROM addresses, the RAM addresses and the step value of subsequent RAM address series with respect to the reference series, analogously to the calculation performed in the address generator described with reference to Fig. 4. The advantages of this known circuit consist in the saving of chip surface area in an implementation in the form of an integrated circuit, because the same circuit is used for several operations. The programmable modulo-N adder 64 is coupled to three register 66, 68 and 70 at the input side. Under the control of a first control signal on a control bus 72, a first increment is added to the contents of the register 70, said sum being buffered again in the register 70. The contents represent the current step value as discussed with reference to Fig. 4. Under the control of a second control signal on the control bus 72, the adder 64 adds a second increment to the contents of the register 66. This sum represents the current ROM address for accessing the ROM 60 in which the reference series is stored as previously described with reference to Fig. 4. When the ROM 60 is accessed by way of the relevant sum, acting as the ROM address, the contents of this ROM address are loaded into the register 68. Under the control of a third control signal on the control bus 72, the contents of the register 68 (being the reference address) and the contents of the register 70 (being the current step value) are summed. The result represents a current RAM address for selecting one of the memory locations of the memory 62.

### THIRD EMBODIMENT OF AN ADDRESS GENERATOR.

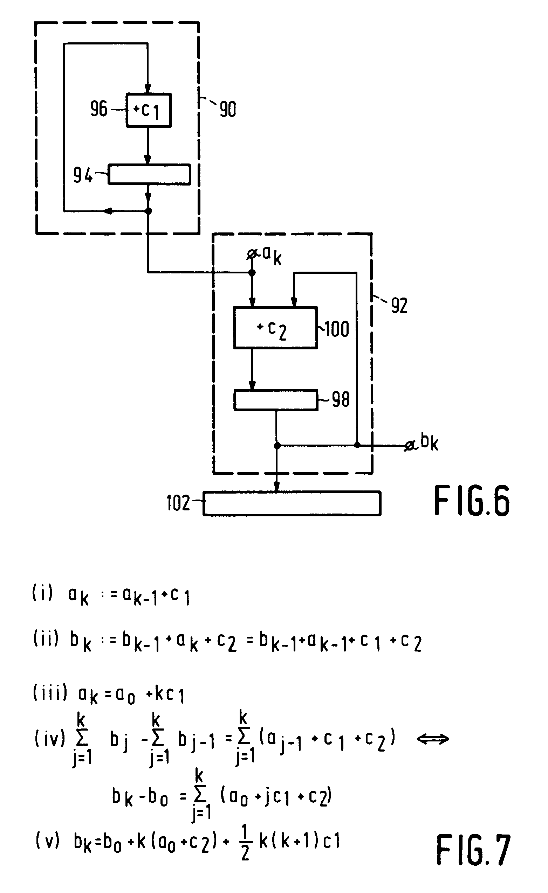

Fig. 6 shows a third embodiment of an address generator suitable for a device in accordance with the invention. The address generator is constructed as a cascade of adders. A cascade comprising two stages 90 and 92 is shown. For the reference series the relevant addresses for the memory locations of the RAM 94 are stored in a separate ROM memory in the previous embodiments. In the present embodiment all RAM addresses are calculated by the address generator. The first stage 90 comprises a register 94 whose output is coupled to the input via an adder circuit 96. The adder circuit adds a first constant c₁ to the preceding register contents and delivers this sum as the new register contents. The second stage 92 comprises a register 98 which is retrocoupled via an adder circuit 100. The adder circuit 100 adds the current register contents of the register 94 plus a second constant c₂ to the preceding register contents of the register 98. The new contents of the register 98 then represent an address for selection of the memory locations 102.

### FORMULAE FOR EXPLAINING THE ADDRESS GENERATOR SHOWN IN FIG. 6.

The operation of the embodiment shown in Fig. 6 will be illustrated on the basis of the formules given in Fig. 7. Formule (i) represents the recursive relation applicable to the output quantity aₖ of the stage 90 for the k^{th} iteration. Formule (ii) represents the output quantity bₖ of the stage 92, again for the k^{th} iteration. It can be simply demonstrated that the formule (iii) represents the output quantity aₖ, expressed in the number of iterations k,the starting quantity aₒ in the register 94, and the first constant c₁. By forming the difference between two partial sums in relation to bₖ, as in the formule (iv), a simple expression (v) can also be derived for the output quantity bₖ in dependence on the number of iterations k, the starting quantities aₒ and bₒ for the registers 94 and 98, and the constants c₁ and c₂.

Depending on the values of the parameters aₒ, bₒ, c₁ and c₂, an arbitrary second-degree function of k can be created. By extending the cascade with stages such as the stage 92, higher-degree functions of k can be realised.

It can be simply demonstrated that the addresses for the starting series in the phase fₒ in the diagram of Fig. 3 can be generated by choosing: aₒ=0, bₒ=1, c₁=1 and c₂=2. By resetting the contents of the register 94 to 0 and the contents of the register 98 to bₒ+1 at the end of each phase, and by also performing a modulo-N operation for determining bₖ, the next desired memory addresses can be generated for RAM 102. A further possibility would be the resetting of the contents of the registers 94 and 98 to aₒ and bₒ, respectively, at the end of each phase and the addition of a number 1 to the result bₖ in a modulo-N counter.

## Claims

1. A device comprising
- memory locations (36) for the buffering of data unit groups (1..4,1′..4′,..) the data units being buffered during successive phases (f0, f1...), for the duration of buffer periods which are recurrent for each group,
- a modulo address generator (30) for generating, for each group, a series of addresses (m1..m16) for the selection of the memory locations (36), respective logic address intervals between successive addresses in the relevant series being indicative of the respective buffer periods, the addresses in the series of two successive phases being shifted one address interval unit with respect to one another, each respective buffer period amounting to a respective first number of successive phases, characterized, in that, the address interval associated with the respective buffer period amounts to a respective second number of address interval units, the second number being equal to the sum of the respective first number and a respective offset.

2. A device as claimed in Claim 1, characterized, in that a further number of memory locations (36) for buffering the groups of data units are provided so that the total number of memory locations equals an integer power of two.

3. A device as claimed in Claim 1 or 2, characterized, in that the address generator (30) comprises
- a reference address generator (40) for generating a cyclical series of reference addresses;
- an incrementation unit (52) for delivering for each subsequent series, a step values incremented by one unit step;
- an adder (50) for adding a current reference address and a current step value and for delivering a current address.

4. A device as claimed in Claim 1 or 2, characterized, in that the address generator (30) comprises
- a first incrementation unit (90) for generating a first current number by summing a preceding first number and a first constant (c1)
- at least one second incrementation unit (92) for generating a second current number by summing each time a preceding second number, a current first number and a second constant (c2).

5. A device as claimed in Claim 1 or 2, characterized, in that the address generator comprises:
- a reference memory (60) for storing a series of reference addresses;
- a first register (70) and a second register (66);
- a programmable adder (64) for executing the following operations:
- adding, under the control of a first signal, a first increment to a content of the first register (70), and thereupon buffering a resultant first sum in the first register (70);
- adding, under the control of a second signal, a second increment to a content of the second register (66) and thereupon buffering a resultant second sum in the second register (66);
- fetching, under the control of a third signal, a reference content from a location of the reference memory (60), indicated by the current contents of the second register (66), and subsequently adding the current reference content to the current content of the first register (70) in order to generate a current address.

6. A CD player comprising a device as claimed in any one of the preceding Claims.

## Patentansprüche

1. Anordnung mit
- Speicherplätzen (36) zum Zwischenspeichern von Gruppen (1...4,1′...4′,..)von Dateneinheiten, wobei die Dateneinheiten während aufeinanderfolgender Phasen (f0, f1, ...) für die Dauer von sich für jede Gruppe wiederholenden Pufferzeiten zwischengespeichert werden,
- einem modulo-Adreßgenerator (30) zum Erzeugen, für jede Gruppe, einer Folge von Adressen (m1, ... m16) für die Selektion der Speicherplätze (36) bzw. logischen Adressenintervalle zwischen aufeinanderfolgenden Adressen in der betreffenden Folge, die die jeweiligen Pufferzeiten anzeigen, wobei die Adressen in der Folge von zwei aufeinanderfolgenden Phasen um eine Adressenintervall-Einheit zueinander verschoben sind und jede jeweilige Pufferzeit sich auf eine jeweilige erste Zahl aufeinanderfolgender Phasen beläuft, dadurch gekennzeichnet, daß das mit der jeweiligen Pufferzeit zusammenhängende Adressenintervall sich auf eine jeweilige zweite Zahl von Adressenintervall-Einheiten beläuft, wobei die zweite Zahl gleich der Summe der jeweiligen ersten Zahl und einem jeweiligen Offset ist.

2. Anordnung nach Anspruch 1, dadurch gekennzeichnet, daß eine weitere Zahl von Speicherplätzen (36) zum Zwischenspeichern der Gruppen von Dateneinheiten vorhanden ist, so daß die Gesamtzahl an Speicherplätzen gleich einer ganzzahligen Potenz von zwei ist.

3. Anordnung nach Anspruch 1 oder 2, dadurch gekennzeichnet, daß der Adreßgenerator (3) folgendes umfaßt:
- einen Bezugsadreßgenerator (40) zum Erzeugen einer zyklischen Folge von Bezugsadressen;
- eine Inkrementierungseinheit (52) zum Liefern eines um eine Einheitsstufe erhöhten Stufenwertes für jede folgende Folge;
- einen Addierer (50) zum Addieren einer aktuellen Bezugsadresse und eines aktuellen Stufenwertes und zum Liefern einer aktuellen Adresse.

4. Anordnung nach Anspruch 1 oder 2, dadurch gekennzeichnet, daß der Adreßgenerator (30) folgendes umfaßt
- eine erste Inkrementierungseinheit (90) zum Erzeugen einer ersten aktuellen Zahl durch Summieren einer vorhergehenden ersten Zahl und einer ersten Konstante (c1);
- mindestens eine zweite Inkrementierungseinheit (92) zum Erzeugen einer zweiten aktuellen Zahl durch jedesmaliges Summieren einer vorhergehenden zweiten Zahl, einer aktuellen ersten Zahl und einer zweiten Konstante (c2).

5. Anordnung nach Anspruch 1 oder 2, dadurch gekennzeichnet, daß der Adreßgenerator folgendes umfaßt
- einen Bezugsspeicher (60) zum Speichern einer Folge von Bezugsadressen;
- ein erstes Register (70) und ein zweites Register (66);
- einen programmierbaren Addierer zum Ausführen der folgenden Operationen:
- Addieren, unter der Steuerung eines ersten Signals, eines ersten Inkrements zum Inhalt des ersten Registers (70) und daraufhin Zwischenspeichern einer sich ergebenden ersten Summe in dem ersten Register (70);
- Addieren, unter der Steuerung eines zweiten Signals, eines zweiten Inkrements zum Inhalt des zweiten Registers (66) und daraufhin Zwischenspeichern einer sich ergebenden zweiten Summe in dem zweiten Register (66);
- Holen, unter der Steuerung eines dritten Signals, eines Bezugsinhalts aus einem Platz des Bezugsspeichers (60), der vom aktuellen Inhalt des zweiten Registers (66) angegeben wird, und anschließendes Addieren des aktuellen Bezugsinhalts zum aktuellen Inhalt des ersten Registers (70), um eine aktuelle Adresse zu erzeugen.

6. CD-Spieler mit einer Anordnung nach einem der vorhergehenden Ansprüche.

## Revendications

1. Dispositif comprenant :
- des emplacements de mémoire (36) pour le tamponnage de groupes d'unités de données (1...4, 1′...4′), les unités de données étant tamponnées durant des phases successives (f0, f1...), pendant la durée de périodes de tamponnage qui sont récurrentes pour chaque groupe, et
- un générateur d'adresses modulo (30) pour générer, pour chaque groupe, une série d'adresses (m1... m16) pour la sélection des emplacements de mémoire (36), des intervalles logiques respectifs entre des adresses successives de la série concernée étant indicatifs des périodes de tamponnage respectives, les adresses dans la série de deux phases successives étant décalées les unes des autres d'une unité d'intervalle d'adresse, chaque période de tamponnage respective correspondant à un premier nombre respectif de phases successives, caractérisé en ce que l'intervalle d'adresse associé à la période de tamponnage respective correspond à un deuxième nombre respectif d'unités d'intervalles d'adresse, le deuxième nombre étant égal à la somme du premier nombre respectif et d'un décalage respectif.

2. Dispositif selon la revendication 1, caractérisé en ce qu'un autre nombre d'emplacements de mémoire (36) pour tamponner les groupes d'unités de données (1) est prévu, de telle sorte que le nombre total d'emplacements de mémoire soit égal à une puissance entière de deux.

3. Dispositif selon la revendication 1 ou 2, caractérisé en ce que le générateur d'adresses (30) comprend :
- un générateur d'adresses de référence (40) pour générer une série cyclique d'adresses de référence;
- une unité d'incrémentation (52) pour délivrer pour chaque série ultérieure une valeur d'échelon incrémentée par échelon unitaire, et
- un additionneur (50) pour additionner une adresse de référence courante et une valeur d'échelon courante et pour délivrer une adresse courante.

4. Dispositif selon la revendication 1 ou 2, caractérisé en ce que le générateur d'adresses (30) comprend :
- une première unité d'incrémentation (90) pour générer un premier nombre courant en sommant un premier nombre précédent et une première constante (c₁), et
- au moins une deuxième unité d'incrémentation (92) pour générer un deuxième nombre courant en sommant chaque fois un deuxième nombre précédent, un premier nombre courant et une deuxième constante (c₂).

5. Dispositif selon la revendication 1 ou 2, caractérisé en ce que le générateur d'adresses comprend :
- une mémoire de référence (60) pour stocker une série d'adresses de référence;
- un premier registre (70) et un deuxième registre (66), et
- un additionneur programmable (64) pour exécuter les opérations suivantes :
- ajouter, sous la commande d'un premier signal, un premier incrément à un contenu du premier registre (70) et ensuite tamponner une première somme résultante dans le premier registre (70);
- ajouter, sous la commande d'un deuxième signal, un deuxième incrément à un contenu du deuxième registre (66) et ensuite tamponnage d'une deuxième somme résultante dans le deuxième registre (66), et
- rechercher, sous la commande d'un troisième signal, un contenu de référence à partir d'un emplacement de la mémoire de référence (60), indiqué par le contenu courant du deuxième registre (66), et ajouter ensuite le contenu de référence courant au contenu courant du premier registre (70) afin de générer une adresse courante.

6. Lecteur de DC comprenant un dispositif selon l'une quelconque des revendications précédentes.
